# EUROPEAN PATENT APPLICATION

(11) **EP 2 672 401 A1**
(43) Date of publication of application: **11.12.2013**
(21) Application number: 13170712.7
(22) Date of filing: 05.06.2013
(51) Int. Cl.: G06F 17/30

(54) **Method and apparatus for storing image data**

(30) Priority: 06.06.2012 US 201261656133 P; 15.03.2013 KR 20130028086
(71) Applicant: Samsung Electronics Co., Ltd, Gyeonggi-do 443-742 (KR)
(72) Inventor: Jeung, Ji-Hong, 443-742 Gyeonggi-do (KR); Cho, Ik-Hwan, 443-742 Gyeonggi-do (KR); Baek, Sung-Hwan, 443-742 Gyeonggi-do (KR); Shin, Dae-Kyu, 443-742 Gyeonggi-do (KR); Jung, Jin-He, 443-742 Gyeonggi-do (KR)
(74) Representative: Gover, Richard Paul

(57) **Abstract**

A method of processing image data is provided. The method includes receiving input image data, determining whether the input image data matches stored image data which is pre-stored in a database, storing, in the database, the input image data which is determined to match the stored image data, and providing the stored image data which is stored in the database.

## Description

### BACKGROUND OF THE INVENTION

### 1. Field of the Invention:

The present invention relates generally to a method and an apparatus for storing image data. More particularly, the present invention relates to a method and an apparatus which builds a DataBase (DB) of image data provided by a user to reuse the image data for a service.

### 2. Description of the Related Art:

Wireless terminals currently provide various services based on a position of the respective wireless terminal. For example, services of showing a map based on a place at which the wireless terminal is located, providing a navigation function, or tracing a position are provided. Particularly, services of providing surrounding images to a user in providing the map or the navigation function are provided.

However, a currently provided image has a limitation in a view at which the image is viewed because the image is constructed in a 2-Dimensional (2D) format. Consequently, the user does not feel secure in obtaining an accurate image which the user desires.

Further, in contrast to a consistently changed actual environment, there are limitations associated with the equipment required and economic feasibilities concerning the use of image data. Accordingly, the user has a difficulty in building a DB of image data on a wide area through continuous updates in reality.

Therefore, a need exists for a method and an apparatus for building an image data DB to be used for a service in real time and automatically by utilizing image data obtained by a user using the service.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and an apparatus for building an image data database (DB) to be used for a service in real time and automatically by utilizing image data obtained by a user using the service.

In accordance with an aspect of the present invention, a method of processing image data is provided. The method includes receiving input image data, determining whether the input image data matches stored image data which is pre-stored in a database, storing, in the database, the input image data which is determined to match the stored image data, and providing the stored image data which is stored in the database.

In accordance with another aspect of the present invention, an image data input device is provided. The image data input device includes a camera unit which captures an image, a position information identifier which identifies location information corresponding to a location at which the image data input device is located, a direction information processor which identifies a direction which a camera included in the data input device faces, and an image data generator which combines time information, the image provided from the camera unit, position information provided from the position information processor, and direction information identified by the direction information processor to generate image data.

In accordance with another aspect of the present invention, an apparatus for processing image data is provided. The apparatus includes an image data input unit which receives input image data, an image data matching unit which determines whether the input image data matches stored image data which is pre-stored in an image data database, an image data manager which stores the input image data which is determined to match the stored image data in the image data database and manages the stored input image data; and an image data provider which provides the stored image data which is stored in the image data database.

In accordance with another aspect of the present invention, a system for providing image data is provided. The system includes at least one user terminal which is configured to capture an image, to determine contextual image data for the image, to associate the contextual image data with the image, and to transmit to at least one server image data comprising the image and the contextual image data associated therewith, and the at least one server which is configured to receive the image data, to determine whether the image data corresponds with any stored image data pre-stored thereon, and to update the stored image data corresponding to the received image data.

According to aspects of the present invention, because an operation of an image data management system is not performed at a particular time, but frequently and repeatedly performed through image data input devices such as a terminal (e.g., portable multimedia device, tablet Personal Computer (PC), digital camera or the like) and a mobile communication terminal (e.g., cellular phone, smart phone or the like) belonging to many and unspecified persons, a database of the image data can be more efficiently constructed by using the image data provided from a plurality of image data input devices.

According to aspects of the present invention, by updating image data frequently provided by the image data input device in real time, most recent image data of a corresponding area or position can be provided and thus more realistic image data can be provided to the user.

According to aspects of the present invention, by automatically identifying additional information from an image provided by the user and storing the identified additional information in an image data DB, a manager who manages the image data DB can lighten the burden of manually inputting the additional information and additional information having better utilization of the user can be efficiently constructed.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of an image data storage management system according to an exemplary embodiment of the present invention;

FIG. 2 is a block diagram illustrating a detailed configuration of an image data input device included in an image data management system according to an exemplary embodiment of the present invention;

FIG. 3 is a block diagram illustrating a detailed configuration of an image data management server included in an image data management system according to an exemplary embodiment of the present invention;

FIG. 4 illustrates an example of a stored image data stored in a database of an image data management server according to an exemplary embodiment of the present invention; and

FIG. 5 is a flowchart of an image data processing method according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As a non-exhaustive illustration only, a portable terminal described herein may refer to mobile devices such as a cellular phone, a smart phone, a Personal Digital Assistant (PDA), a digital camera, a portable game console, and an MP3 player, a Portable/Personal Multimedia Player (PMP), a handheld e-book, a portable lap-top Personal Computer (PC), a Global Positioning System (GPS) navigation, a tablet PC, and devices such as a desktop PC, a High Definition Television (HDTV), an optical disc player, a setup box, and the like capable of wireless communication or network communication consistent with that disclosed herein.

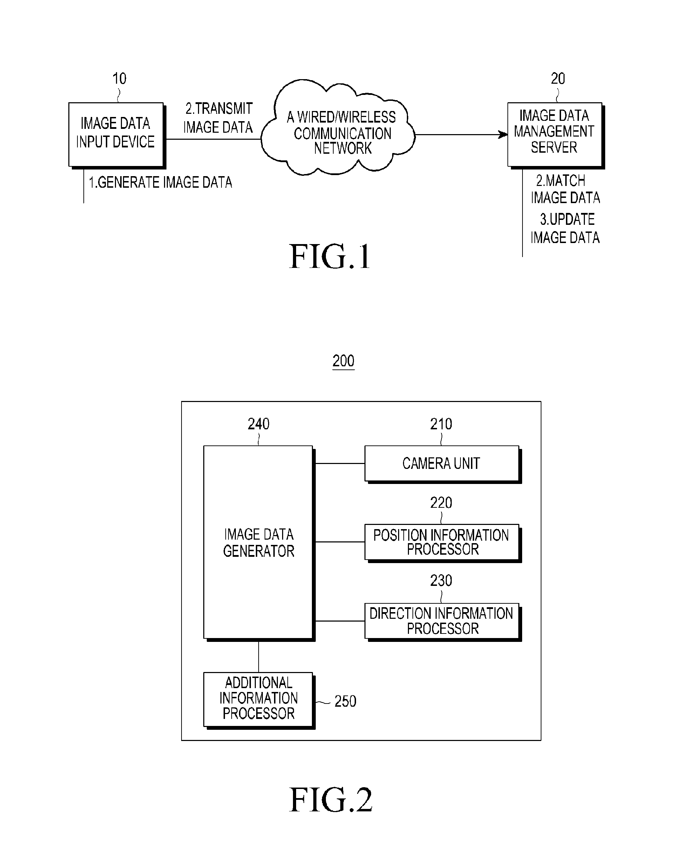

FIG. 1 is a block diagram of an image data storage management system according to an exemplary embodiment of the present invention.

Referring to FIG. 1, the image data management system according to the exemplary embodiment of the present invention includes an image data input device and an image data management server connected through a wired/wireless communication network.

The image data input device 10 includes a camera for photographing an image and a communication module for transmitting image data through a wired/wireless communication network. For example, the image data input device 10 may correspond to a portable terminal, an image photographing device provided for a special purpose such as constructing image data, and/or the like.

The image data management server 20 receives image data provided from the image data input device 10 to build a DataBase (DB), and forms an environment by which the built database can be provided to the user.

Particularly, the image data management server 20 can receive image data from a plurality of image data input devices 10 to store the received image data, update the image data in consideration of information (e.g., position information, direction information, time information, weather information and the like) included in the image data provided from the plurality of image data input devices 10 to store and manage the updated image data, and to provide most recently updated image data to the user, and/or to provide the updated image data in a history form according to a chronological order.

An operation of the image data management system will be described. The image data input device 10 first transmits obtained image data to the image data management server 20 through a wired/wireless communication network. Thereafter, the image data management server 20 identifies an area of the database which matches the received image data in consideration of various information included in the image data (e.g., GPS information, direction information, time information, weather information and the like) and identifies stored image data which matches the received image data. Thereafter, the image data management server 20 identifies a correlation between the received image data and the stored image data, updates the image data to the received image data, and stores the updated image data.

The operation of the image data management system is not performed at a particular time, but frequently and repeatedly performed through the image data input device 10 such as a portable terminal or the like belonging to many and unspecified persons. Accordingly, the image data management server 20 has an advantage in that the image data management server 20 can more efficiently build the database of the image data within the image data management server 20 by using the image data provided from the plurality of image data input devices 10. In addition, the image data management server 20 has an advantage in that the image data management server 20 can provide most recent image data of a corresponding area or position by updating the image data provided by the image data input device 10 in real time, thereby providing more realistic image data to the user.

According to exemplary embodiments of the present invention, the image data input device 10 generates image data and transmits the image data to the image data management server 20, and the image data management server 20 receives the image data from the image data input device 10, matches the image data with image data stored in a database, and updates the corresponding image data in the database.

FIG. 2 is a block diagram illustrating a detailed configuration of an image data input device included in an image data management system according to an exemplary embodiment of the present invention.

Referring to FIG. 2, the image data input device 200 includes a camera unit 210, a position information processor 220, a direction information processor 230, and an image data generator 240.

The camera unit 210 may be a general camera for photographing an image, which outputs color information on a photographed area in a raw data form or a data form compressed using a predetermined format. According to exemplary embodiments of the present invention, the image indicates data output from the camera unit 210 and is defined as raw data or color information compressed using a predetermined format.

In general, the position information processor 220 corresponds to a device for determining a coordinate in a latitude and a longitude of an area at which the image data input device 200 is currently located. The image data input device 200 determines a distance between a satellite and a receiver through identification of a signal transmitted from the satellite. As an example, the position information processor 220 may determine the distance between the satellite and the receiver based on the signal transmitted from the satellite. The position information processor 220 is a module for processing a signal based on a satellite navigation system to identify a position and may include, for example, GPS, BEIDOU, DORIS, GLONASS, GALILEO, IRNSS, QZSS, EGNOS, GAGAN, GPS-C, LAAS, MSAS, WAAS, STAR FIRE, and the like.

Additionally, when the position information processor 220 is located indoors, the position information processor 220 may further include a module for determining an indoor position. For example, the position information processor 220 can detect the indoor location and movement by using Wi-Fi, an acceleration sensor, a G-sensor, and the like.

Further, the position information processor 220 may determine an altitude of the image data input device by using an altitude sensor and may include the determined altitude in the position information.

Particularly, the direction information processor 230 determines a direction in which the camera included in the image data input device is headed, generates information on the direction (hereinafter, referred to as direction information), and thereafter provides the generated direction information. For example, the direction information processor 230 may include a direction sensor by which the direction information is determined. Alternatively, the direction information processor 230 determines direction information by using information determined using an acceleration sensor, a magnetic field sensor, and/or the like.

The image data generator 240 controls operations of the camera unit 210, the position information processor 220, and the direction information processor 230 in order to generate the image data. The image data generator 240 first instructs the camera unit 210 to operate and thus the camera unit 210 is activated. Thereafter, the image data generator 240 outputs color information obtained through the camera unit 210 to a display (not shown) by using a preview function. Simultaneously, the image data generator 240 operates the position information processor 220 and the direction information processor 230 and controls actions for obtaining position information and direction information to standby.

Thereafter, when a photographing button is input by the user, the camera unit 210 converts color information to information in a predetermined format, and generates and outputs an image at a corresponding viewpoint and time. The image data generator 240 instructs the position information processor 220 and the direction information processor 230 to identify (e.g., determine) position information and direction information at the viewpoint and time when the image is generated. Further, the image data generator 240 generates image data by combining the image provided by the camera unit 210, the position information provided by the position information processor 220, the direction information provided by the direction information processor 230, and time information (which may be internally identified). The generated image data is first stored within the image data generator 240 and then is transmitted to the image data management server through the communication module.

Further, the image data input device may further include an additional information processor 250 for extracting additional information from the image provided by the camera unit 210 and for providing the extracted additional information. The additional information processor 250 can detect additional information such as a predetermined character, a direction indication and the like from the image provided by the camera unit 210 by applying a character detection algorithm to the image. The character may include, for example, a character marked in a road sign, a character marked in a signboard of a building, a contact number, a character indicating a price of a particular product, and the like. At this time, the additional information processor 250 can provide a coordinate of an area at which the additional information is detected to an image data manager 330 so that a three-dimensional position of the additional information can be identified using the coordinate of the area at which the additional information is detected.

Meanwhile, in generating the image data, the image data generator 240 can generate image data further including the additional information provided by the additional information processor 250.

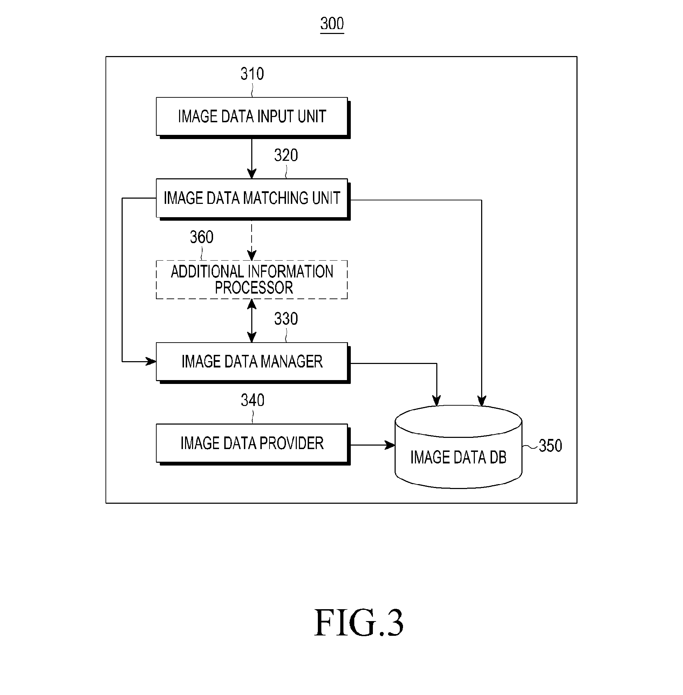

FIG. 3 is a block diagram illustrating a detailed configuration of an image data management server included in an image data management system according to an exemplary embodiment of the present invention.

Referring to FIG. 3, the image data management server 300 includes an image data input unit 310, an image data matching unit 320, an image data manager 330, an image data provider 340, and an image data DB 350.

The image data input unit 310 corresponds to an input/output interface device for receiving image data from the outside. As an example, the image data input unit 310 performs a function of receiving image data generated by the image data input device through a communication network or a function of receiving image data from a storage medium for storing image data acquired by an external device. The image data input unit 310 can receive the image data through the storage medium storing the image data acquired by the external device, a USB, an optical transmission port, a serial port, a parallel port, or the like.

The image data matching unit 320 compares image data (hereinafter, referred to as input image data) input from the image data input unit 310 with image data (hereinafter, referred to as stored image data) stored in the image data DB and identifies (e.g., determines) stored image data which matches the input image data. The image data matching unit 320 may identify (e.g., determine) the matching stored image data by considering position information, direction information, time information and the like included in the image data. More preferably, the image data matching unit 320 can identify the stored image data by making a request for weather information to a server (not shown) providing the weather information by using the position information and the time information and reflecting the weather information.

Further, the image data matching unit 320 scores (e.g., calculates) an image matching ratio between the input image data and the stored image data. When the image matching ratio is equal to or larger than a predetermined ratio, the image data matching unit 320 may determine that the input image data matches (e.g., corresponds to) the stored image data.

Specifically, an operation of the image data matching unit 320 will be described. The image data matching unit 320 first detects a plurality of stored image data corresponding to the input image data from the image data DB 350 as a candidate group by reflecting the position information, direction information, time information, weather information, and the like contained in the input image data. Further, the image data matching unit 320 applies each image of the plurality of stored image data included in the detected candidate group and an image of the input image data to an image matching algorithm to identify a matching ratio between the two images. Thereafter, the image data matching unit 320 determines that the input image data matches the stored image data having a relatively high matching ratio. As described above, the image data matching unit 320 reflects the position information, the direction information, the time information, the weather information, and the like and then identifies (e.g., determines) again whether the images included in the selected candidate group match the input image data through a process of processing the image matching, so that the more accurately matching image data can be detected and thus reliability of the image data can increase. Accordingly, the image data management server 300 according to exemplary embodiments of the present invention can provide more precise and reliable image data when being applied to augmented reality.

The image data manager 330 manages image data stored in the image data DB 350. Further, the image data manager 330 updates the stored image data which is identified (e.g., determined) to match the input image data by the image data matching unit 320 to the input image data and stores the updated input image data. At this time, the image data manager 330 updates the stored image data to the input image data and then stores the updated input image data or stores the input image data according to a chronological order of the corresponding stored image data.

Further, when there are a plurality of image data at the same position and angle when the stored image data is stored, the image data manager 330 can extract 3-Dimensional (3D) data by using the plurality of image data and further store the extracted 3D data. Specifically, the image data manager 330 identifies (e.g., determines) an overlapping area from the plurality of images at the same position and angle, converts the overlapping area to an image in a 3D image format, and applies a stereo matching to the 3D converted image, so that feature points of subjects included in the 3D converted image are extracted and the extracted feature points are stored as the 3D data. At this time, because a plurality of images having the same position and angle exist, a more realistic 3D image may be implemented and more accurate and reliable 3D data based on the implemented 3D image may be extracted.

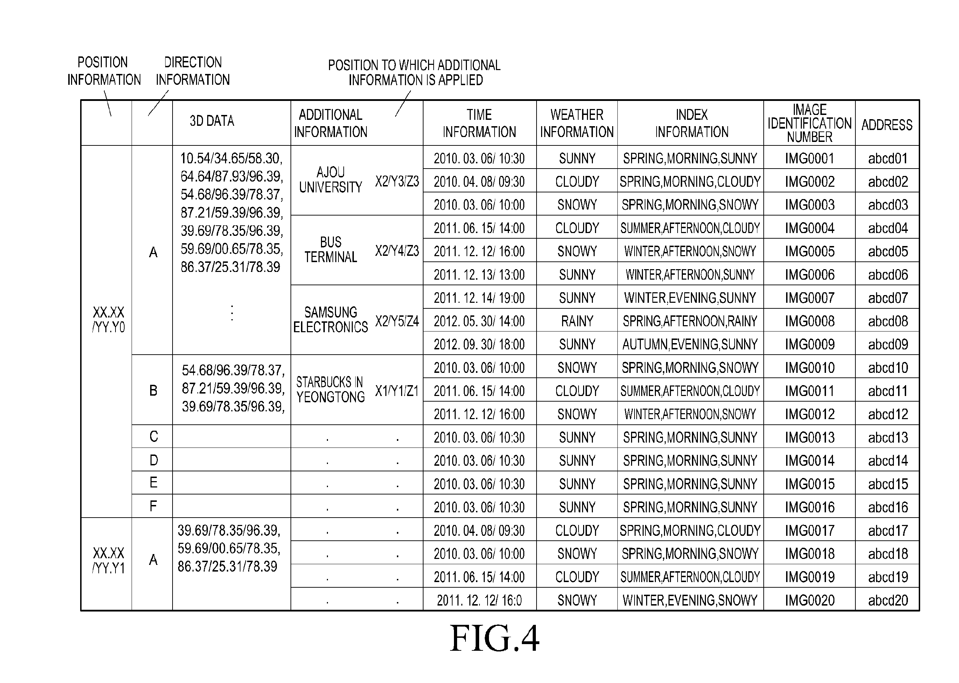

FIG. 4 illustrates an example of a stored image data stored in a database of an image data management server according to an exemplary embodiment of the present invention.

Referring to FIG. 4, the image data DB 350 is divided into an area storing information on the image data and an area storing an actual image. For example, the area storing the information on the image data stores the image data in accordance with a predetermined format in order to easily perform the matching between pieces of information included in the image data as illustrated in FIG. 4. To this end, the image data manager 330 stores information identified by the image matching unit 320 in the image data DB 350. As an example, the information identified by the image matching unit 320 may correspond to position information, direction information, time information, weather information and the like of the input image data. The image data manager 330 automatically generates index information based on a predetermined rule to efficiently search for the stored image data by additionally using the time information and the weather information and stores the generated index information in the image data DB 350. For example, when the index information is generated in consideration of time information, the index information is set to correspond to spring when a date is between March and May, is set to correspond to summer when the data is between June and August, is set to correspond to fall when the date is between September and November, is set to correspond to winter when the date is between December and February, is set to correspond to morning when a time is between 06:00 and 12:00, is set to correspond to afternoon when the time is between 12:00 and 18:00, is set to correspond to evening when the time is between 18:00 and 20:00, is set to correspond to night when the time is set between 20:00 and 06:00, and the like.

The image data provider 340 has an environment by which the stored image data which is stored in the image data DB 350 can be provided to the user terminal. For example, the image data provider 340 identifies image data corresponding to a position, direction, and time requested from the user terminal from the stored image data which is stored in the image data DB 350 and provides a web page or a 3D map application environment by which the identified stored image data can be provided to the user terminal.

Further, the image data management server 300 may also include an additional information processor 360 for identifying additional information from the input image data. For example, the additional information processor 360 can detect additional information such as a predetermined character, a direction indication, and the like from the image by applying a character detection algorithm to the image included in the input image data.

Because the image data input device may include the additional information processor, the input image data may already include the additional information. Accordingly, when the input image data includes the additional information, the additional information processor 360 identifies (e.g., determines) the additional information included in the input image data to provide the identified additional information to the image data manager 330 without separately detecting the additional information from the image included in the input image data.

Further, the additional information provider 360 can provide a coordinate of an area at which the additional information is detected to the image data manager 330, and the image data manager 330 can identify a 3D position of the additional information by using the coordinate of the area at which the additional information is detected. Specifically, the image data manager 330 identifies an overlapping area from a plurality of images at the same position and angle by identifying a plurality of stored image data corresponding to the input image data from which the additional information is detected, converts the overlapping area to an image having a 3D image format, and applies a stereo matching to the 3D converted image, so as to identify the 3D coordinate at which the additional information is included in the 3D converted image. Accordingly, through the plurality of images having the same position and angle, the additional information can be expressed at a position closer to reality, so that a more accurate and reliable 3D map or augmented reality service may be provided. According to the related art, the manager directly maps the additional information into the image manually. However, according to exemplary embodiments of the present invention, the manager can more simply map and express the additional information into an accurate position through the image data management server without cumbersomeness of directly mapping or inputting a lot of data.

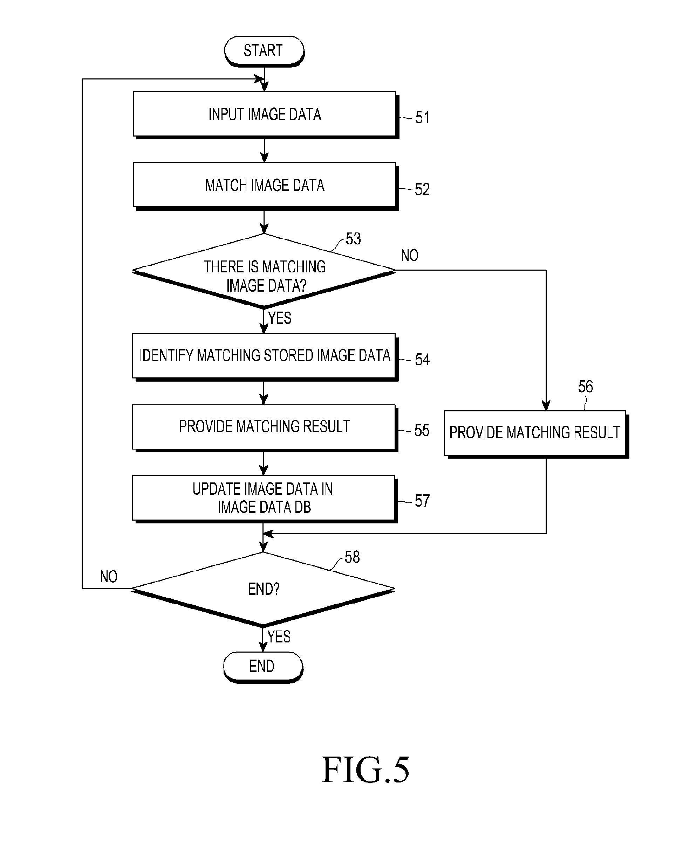

A detailed operation of the image data management server will be discussed by describing the order of the image data processing method with reference with the aforementioned components and FIG. 5.

FIG. 5 illustrates an order of an image data processing method performed by the image data management server according to an exemplary embodiment of the present invention.

Referring to FIG. 5, first, the image data input unit 310 receives image data from the outside. For example, the image data input unit 310 performs a function of receiving image data generated by the image data input device through a communication network or receives image data acquired by the external device through a terminal such as a USB in step 51.

Thereafter, in step 52, the input image data is transmitted to the image data matching unit 320, and the image data matching unit 320 compares the input image data with the stored image data for determination as to whether any stored image data, which matches the input image data, exists.

Thereafter, the image data matching unit 320 identifies (e.g., determines) whether there is stored image data which matches the input image data in the image data DB 350 in step 53. Specifically, the image data matching unit 320 detects a plurality of stored image data corresponding to the input image data as a candidate group from the image data DB 350 by reflecting position information, direction information, time information, weather information, and/or the like included in the input image data. Further, the image data matching unit 320 applies each image of the plurality of stored image data included in the detected candidate group and an image of the input image data to an image matching algorithm to identify a matching rate of the two images, and determines that the input image data matches a stored image data having a relatively high matching rate. As described above, because the image data matching unit 320 identifies (e.g., determines) whether the stored image data matches the input image data through a process of performing again the image matching on the images included in the selected candidate group after reflecting the position information, the direction information, the time information, and/or the weather information, more accurately matching image data can be detected and thus reliability of the image data can be increased. Accordingly, the image data management server according to exemplary embodiments of the present invention can provide more precise and reliable image data in application to augmented reality.

Thereafter, when the stored image data corresponding to the input image data is determined to exist (e.g., identified) in step 53, the image data matching unit 320 provides a result to the image data provider 340, and the image data provider 340 detects the corresponding stored image data from the image data DB 350 in step 54.

Thereafter, the image data provider 340 provides a result value indicating that there is the stored image data corresponding to the input image data and the stored image data identified in step 54 to the image data input device in step 55.

In contrast, when no stored image data corresponding to the input image data is determined to exists in step 53, the image data matching unit 320 provides a result thereof to the image data provider 340, and the image data provider 340 provides a result value indicating that there is no stored image data corresponding to the input image data to the image data input device in step 56.

Further, the image data manager 330 updates the stored image data which is identified to match the input image data by the image data matching unit 320 to the input image data and then stores the updated input image data. The image data manager 330 stores the information identified by the image matching unit 320 in an area at which information on the image data is stored, and stores the image included in the input image data in an area at which the actual image is stored in step 57. As an example, the information identified by the image matching unit 320 may correspond to the position information, time information, and weather information of the input image data.

Further, in step 57, the image data manager 330 automatically generates index information based on a predetermined rule to efficiently search for the stored image data by using time information and weather information, and stores the generated index information in the image data DB 350. For example, in step 57, the image data manager updates stored image data which is stored in the image data DB 350.

When the image data manager 330 stores the stored image data in step 57, if there are a plurality of image data at the same position and angle, 3D data can be extracted and further stored by using the plurality of image data. Specifically, the image data manager 330 identifies an overlapping area from the plurality of images at the same position and angle, converts the overlapping area to an image in a 3D image format, and applies a stereo matching to the 3D converted image, so that feature points of subjects included in the 3D converted image are extracted and the extracted feature points are stored as the 3D data. At this time, because a plurality of images having the same position and angle may exist, a 3D image closer to reality can be implemented and thus more accurate and reliable 3D data can be extracted based on the implemented 3D image.

Further, steps 51 to 57 are repeatedly performed until the operations of the image data processing method end. For example, in step 58, the image data manager 330 may determine whether any further input image data exists. If no further input data exists, the image data processing method may end. In contrast, if further input data exists, the method may return to step 51.

Although it has been described that the image data DB is updated by using the input image data input during a process of receiving the image data from a user terminal, matching the image data, and providing a result thereof, exemplary embodiments of the present invention are not limited thereto and can be applied as long as an operation of automatically building the DB by using the image data provided from a plurality of user terminals can be performed. For example, when input image data is determined to match stored image data through only the input of the image data without a request for a result corresponding to the image data from the user terminal, the input image data can be updated and stored in the DB. In this case, steps 54 to 56 can be omitted.

Additionally, the image data processing method according to the exemplary embodiments of the present invention may further include an operation of identifying additional information from the input image data. The operation of identifying the additional information from the input image data can be performed by the additional information processor 360. The operation of identifying the additional information can be performed between steps 53 to 57. First, it is identified whether the additional information is included in the input image data. When the input image data is determined to include additional information, an operation of detecting the additional information from the image included in the input image data is not separately performed. When the additional information is not included in the input image data, an operation of applying a character detection algorithm to the image included in the input image data to detect the additional information such as a predetermined character, a direction indication, and like from the image is performed.

Further, the additional information processor 360 can provide a coordinate of an area at which the additional information is detected to the image data manager 330, and the image data manager 330 can identify a 3D position of the additional information by using the coordinate of the area at which the additional information is detected. Specifically, the image data manager 330 identifies an overlapping area from a plurality of images at the same position and angle by identifying a plurality of stored image data corresponding to the input image data from which the additional information is detected, converts the overlapping area to an image having a 3D image format, and applies a stereo matching to the 3D converted image, so as to identify the 3D coordinate at which the additional information is included in the 3D converted image. Accordingly, there are advantages in that the manager who manages the image data DB 350 can lighten the burden of manually inputting the additional information and additional information having better utilization of the user can be efficiently constructed. Further, through a plurality of images having the same position and angle, the additional information can be expressed in a position close to reality and thus a more accurate and reliable 3D map or augmented reality service can be provided.

It will be appreciated that exemplary embodiments of the present invention according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a machine-readable storage storing such a program.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A method of processing image data, the method comprising:
receiving input image data;
determining whether the input image data matches stored image data which is pre-stored in a database;
storing, in the database, the input image data which is determined to match the stored image data; and
providing the stored image data which is stored in the database.

2. The method of claim 1, wherein the input image data includes position information, direction information, time information, and an image.

3. The method of claim 1, wherein the stored image data includes position information, direction information, time information, weather information, and an image.

4. The method of claim 1, further comprising:
generating additional information including a character detected from an image included in the input image data.

5. The method of claim 1, wherein the receiving of the input image data comprises:
receiving, from a user terminal, the input image data together with a request for identifying a position of the user terminal.

6. The method of claim 5, further comprising:
providing the stored image data which matches the input image data to the user terminal.

7. An image data input device comprising:
a camera unit which captures an image;
a position information identifier which identifies location information corresponding to a location at which the image data input device is located;
a direction information processor which identifies a direction which a camera included in the data input device faces; and
an image data generator which combines time information, the image provided from the camera unit, position information provided from the position information processor, and direction information identified by the direction information processor to generate image data.

8. The image data input device of claim 7, wherein the direction information processor comprises a direction sensor and determines direction information by using information detected through the direction sensor.

9. The image data input device of claim 7, wherein the direction information processor determines direction information by using information detected through at least one of an acceleration sensor and a magnetic field sensor.

10. The image data input device of claim 7, further comprising an additional information processor which extracts additional information from the image provided from the camera unit and which provides the extracted additional information.

11. An apparatus for processing image data, the apparatus comprising:
an image data input unit which receives input image data;
an image data matching unit which identifies whether the input image data matches stored image data which is pre-stored in an image data database;
an image data manager which stores the input image data which is determined to match the stored image data in the image data database and manages the stored input image data; and
an image data provider which provides the stored image data which is stored in the image data database.

12. The apparatus of claim 11, wherein the input image data includes position information, direction information, time information, and an image.

13. The apparatus of claim 11, wherein the stored image data includes position information, direction information, time information, weather information, and an image.

14. The apparatus of claim 11, further comprising:
an additional information processor which generates additional information including a character detected from an image included in the input image data.

15. The apparatus of claim 11, wherein the image data input unit receives, from a user terminal, the input image data together with a request for identifying a position of the user terminal.
